# EUROPEAN PATENT APPLICATION

(11) **EP 4 733 058 A1**
(43) Date of publication of application: **29.04.2026**
(21) Application number: 23942369.2
(22) Date of filing: 22.06.2023
(51) Int. Cl.: B32B 5/00, B32B 3/12

(54) **SANDWICH PANEL STRUCTURE AND SANDWICH PANEL STRUCTURE MANUFACTURING METHOD**

(71) Applicant: MITSUBISHI ELECTRIC CORPORATION, Chiyoda-ku Tokyo 100-8310 (JP)
(72) Inventor: TAKAGAKI, Kazunori, Tokyo 100-8310 (JP); ITO, Yohei, Tokyo 100-8310 (JP); KOYAMA, Tatsuya, Tokyo 100-8310 (JP)
(74) Representative: Meissner Bolte Partnerschaft mbB
(86) International application number: PCT/JP2023/023035
(87) International publication number: WO 2024/261933

(57) **Abstract**

A sandwich panel structure (1) includes a plurality of split members (11). Each of the split members (11) is formed from two skin components (12) and a core component (13) positioned between the two skin components (12). In a joined portion (31) of the plurality of split members (11), a groove portion (23) is present in the skin component (12), the groove portion (23) being formed by reducing the thickness of the skin component (12) in a range in which the outer surface of the core component (13) remains unexposed. A patch member (21) is positioned in the groove portion (23) via adhesive (22). With the plurality of split members (11) being in a joined state, the total thickness of the skin component (12), the adhesive (22), and the patch member (21) in the plate thickness direction in the joined portion (31) is continuous with the thickness of the skin component (12) in the plate thickness direction in a non-joined portion (32) at the boundary between the joined portion (31) and the non-joined portion (32).

## Description

### Technical Field

The present invention relates to sandwich panel structures and a method of manufacturing a sandwich panel structure.

### Background Art

With the growing demand for higher functionality of communications and broadcasting satellites, high-power satellite buses are needed for mounting of advanced communication equipment with high power consumption. For enabling high-power satellite buses, larger solar cell panels are desired. Here, a solar cell panel is a structure formed from a substrate made of a sandwich panel and multiple solar cells mounted on it. In order to increase the size of a solar cell panel, it is essential to increase the size of the sandwich panel structure.

A sandwich panel structure requires integration of a core component and a skin component. Accordingly, conventional techniques suffer from the problem of the upper limit of size increase being restricted by the size of a molding furnace.

To address it, one approach under consideration is to split a sandwich panel structure into multiple pieces and join them in a later stage, thus achieving a large-sized sandwich panel structure. By splitting a sandwich panel structure into multiple pieces within the size limitation of the molding furnace, the size of the sandwich panel structure can be increased without being bound by the size limitation of the molding furnace.

Patent Literature 1 discloses a sandwich structure and a method of manufacturing the sandwich structure.

The sandwich structure disclosed by Patent Literature 1 includes a core component and FRP (Fiber Reinforced Plastics) skin plates positioned on both sides of the core component, with the ends of sandwich structures butt-joined. The sandwich structure is characterized by the provision of a FRP connection layer extending over the surfaces of the two ends and the provision of a layer that contains resin distribution media between the butting end faces.

### Citation List

### Patent Literature

Patent Literature 1: JP 2000-108232 A

### Summary of the Invention

### Technical Problem

The technique disclosed by Patent Literature 1 can firmly join multiple split sandwich structures by providing the FRP connection layer extending over the surfaces of the two ends in a joined portion of the sandwich structure where it is butt-joined with another sandwich structure.

However, with the sandwich structure disclosed by Patent Literature 1, the thickness of an FRP layer consisting of the FRP skin plates and the FRP connection layer at the joined portion is greater than that in a non-joined portion because the FRP connection layer is provided on the surfaces of FRP skin plates. The technique disclosed by Patent Literature 1 has the issues of uneven thermal deformation resulting from this uneven thickness and reduction of strength at the connection portion of the joined portion and the non-joined portion. The connection portion can be, as a specific example, a boundary portion between a region in which an FRP connection layer 6 is present and a region in which it is not present in FIGS. 5 to 7 of Patent Literature 1.

An object of the present invention is to provide a sandwich panel structure that is split in multiple pieces, where the thickness of the joined portion in a plate thickness direction is continuous with the thickness of the non-joined portion in the plate thickness direction at the boundary between the joined portion and the non-joined portion.

### Solution to the Problem

A sandwich panel structure according to the present invention includes a plurality of split members, wherein
when each split member of the plurality of split members is denoted as a first split member and the first split member is joined to a second split member of the plurality of split members,
the first split member is formed from two skin components and a core component positioned between the two skin components, one of the two skin components being denoted as a first target skin component,
the first target skin component has a groove portion in a joined portion of the first split member in which the first split member is joined to the second split member, the groove portion being formed by reducing a thickness of the first target skin component in a range in which an outer surface of the core component remains unexposed,
with the first split member and the second split member being in a joined state,
a patch member is positioned in the groove portion via adhesive, and
at a boundary between the joined portion and a non-joined portion, the non-joined portion being a portion of the first split member other than the joined portion, a total thickness of the first target skin component, the adhesive, and the patch member in a plate thickness direction in the joined portion is continuous with a thickness of the first target skin component in the plate thickness direction in the non-joined portion.

### Advantageous Effects of the Invention

According to the present invention, with the first split member and the second split member being in a joined state, the total thickness of the first target skin component, the adhesive, and the patch member in the plate thickness direction in the joined portion is continuous with the thickness of the first target skin component in the plate thickness direction in the non-joined portion at the boundary between the joined portion and the non-joined portion. The present invention therefore can provide a sandwich panel structure that is split in multiple pieces, where the thickness of the joined portion in the plate thickness direction is continuous with the thickness of the non-joined portion in the plate thickness direction at the boundary between the joined portion and the non-joined portion.

### Brief Description of the Drawings

FIG. 1 is a perspective view showing an exemplary configuration of a sandwich panel structure 1 according to Embodiment 1.
FIG. 2 is a cross-sectional view showing an exemplary configuration of the sandwich panel structure 1 according to Embodiment 1.
FIG. 3 is a cross-sectional enlarged view showing an exemplary configuration of the sandwich panel structure 1 according to Embodiment 1.
FIG. 4 is a side view showing an exemplary configuration of the sandwich panel structure 1 according to Embodiment 2.
FIG. 5 is a cross-sectional enlarged view showing an exemplary configuration of the sandwich panel structure 1 according to Embodiment 2.
FIG. 6 is a cross-sectional enlarged view showing an exemplary configuration of the sandwich panel structure 1 according to Embodiment 3.
FIG. 7 is a cross-sectional enlarged view showing an exemplary configuration of the sandwich panel structure 1 according to Embodiment 4.
FIG. 8 is an upper view showing an exemplary configuration of the sandwich panel structure 1 according to Embodiment 5.
FIG. 9 illustrates a specific example of a method of manufacturing the sandwich panel structure 1 according to Embodiment 6, where (a) illustrates a member molding step, (b) illustrates a groove and patch member processing step, (c) illustrates a positioning step, and (d) illustrates an integration step.

### Description of Embodiments

In the description of embodiments and drawings, the same elements and corresponding elements are given the same reference characters. Description of elements with the same reference characters are omitted or simplified as appropriate.

### Embodiment 1.

This embodiment will be described below in detail with reference to drawings.

### Description of construction

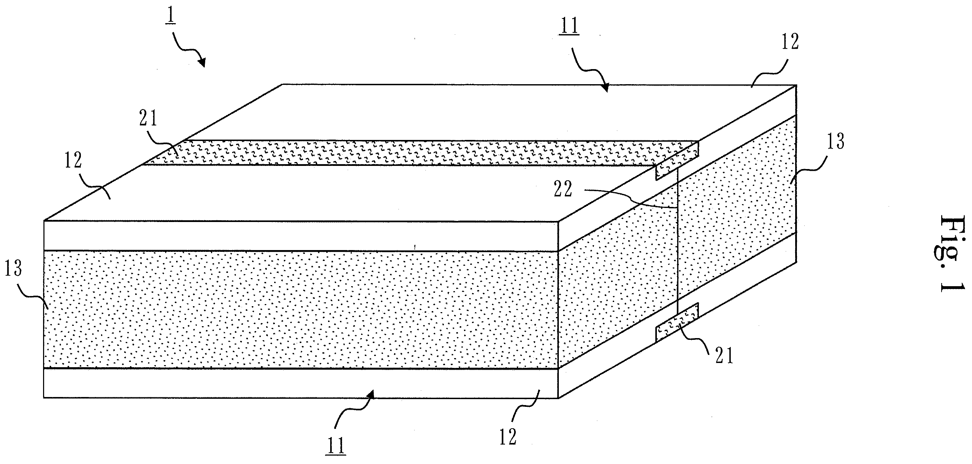

FIG. 1 is a perspective view showing an exemplary configuration of a sandwich panel structure 1 according to Embodiment 1. The sandwich panel structure 1 is formed from multiple split members 11, patch members 21, and adhesive 22.

Each split member 11 is formed from two skin components 12 and a core component 13 positioned between the two skin components 12.

In the split member 11, grooves for placing the patch member 21 have been formed by reducing the thickness of the skin component 12 within a range in which the outer surface of the core component 13 remains unexposed. The thickness of a member is its length in the plate thickness direction. The plate thickness direction is the normal direction of the upper surface of the sandwich panel structure 1. The upper surface of the sandwich panel structure 1 is a face that is formed from the skin components 12 and the patch member 21 and on which the core component 13 is not exposed.

By two neighboring split members 11 being joined via the adhesive 22 and the patch member 21, the sandwich panel structure 1 is formed as an integral piece.

A joined portion 31 will be now described in detail with specific examples.

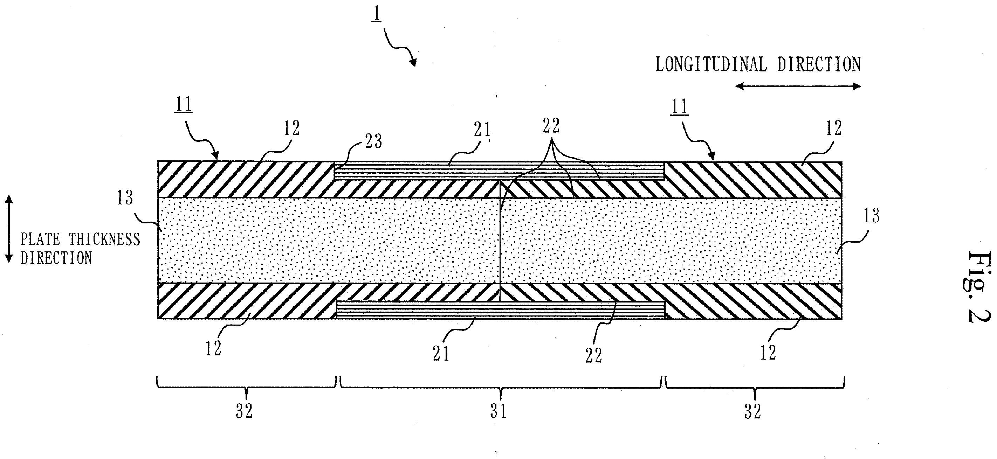

FIG. 2 is a cross-sectional view showing an exemplary configuration of the sandwich panel structure 1. A cross section is one of the side surfaces of the sandwich panel structure 1 that has the same normal as the normal to the plane that contains the joined portion 31, such as the one shown in FIG. 2. The direction that is orthogonal both to the normal to the cross section and the plate thickness direction of the sandwich panel structure 1 is called a longitudinal direction.

When the sandwich panel structure 1 is seen along the longitudinal direction, a region thereof in which the patch members 21 are present is called a joined portion 31 and regions other than the joined portion 31 are called non-joined portions 32, as depicted in FIG. 2. The joined portion 31 is a part where the split member 11 is joined to the other split member 11.

FIG. 2 shows a plate-shaped sandwich panel structure with a uniform thickness as an example of the sandwich panel structure 1. The sandwich panel structure 1 shown in FIG. 2 is made up of two split members 11 which are formed by splitting the sandwich panel structure 1 in a plane with the normal being in the longitudinal direction.

The skin component 12 has groove portions 23 in the joined portion 31 for fitting the patch members 21. Each groove portion 23 is formed by reduction in the thickness of the skin component 12 in the joined portion 31 within a range in which the surface of the core component 13 remains unexposed when the sandwich panel structure 1 is seen from the plate thickness direction. The skin component 12 has not been cut at the boundary between the joined portion 31 and the non-joined portion 32. That is, the skin component 12 is continuous at the boundary along the longitudinal direction of the sandwich panel structure 1.

The patch members 21 are each a member with a rectangular cross section. Each patch member 21 is fit in the groove portions 23 provided in the two skin components 12 via the adhesive 22, thus being joined to the two skin components 12.

For the skin component 12 and the patch member 21, an aluminum alloy (A5052) can be used as a specific example.

In the joined portion 31, the core component 13 as a component of each split member 11 is joined to the opposite core component 13 via the adhesive 22. As specific examples, honeycomb core made of an aluminum alloy can be used for the core component 13, and film adhesive (REDUX (registered trademark) 312, manufactured by Hexcel Corporation) can be used for the adhesive 22.

The thickness of the core component 13 does not change at the boundary between the joined portion 31 and the non-joined portions 32. The core component 13 is present between the two skin components 12 over the entire area in the longitudinal direction. The core component 13 is joined to the skin components 12 via the adhesive 22.

In the joined portion 31, the skin component 12 as a component of each split member 11 is joined to the core component 13 or to the skin component 12 of the opposite split member 11 via the adhesive 22 in the surfaces on which the skin component 12 is not in contact with the patch member 21.

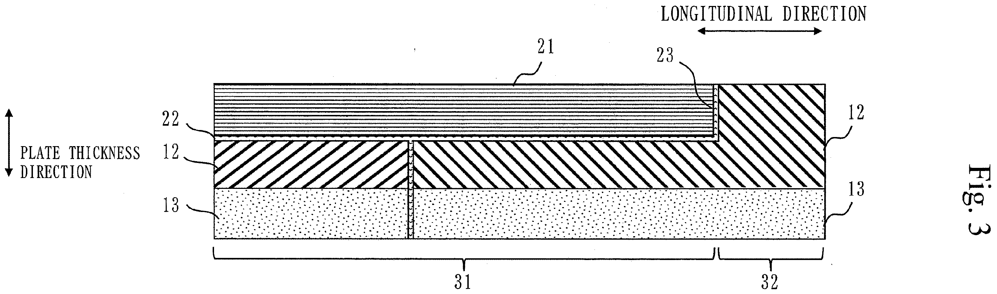

FIG. 3 is a cross-sectional enlarged view of one side of the sandwich panel structure 1, showing an exemplary configuration of the sandwich panel structure 1. In FIG. 3, the thickness of the patch member 21 in the plate thickness direction is set equal to the difference between the depth of the groove portion 23 in the plate thickness direction and the thickness of the adhesive 22 in the plate thickness direction. As a specific example, when the thickness of the patch member 21 is 500 µm and the thickness of the adhesive 22 is 50 µm, the depth of the groove portion 23 is 550 µm.

In this example, as a result of making the thickness of the patch member 21 equal to the difference between the depth of the groove portion 23 and the thickness of the adhesive 22, the height of the surface of the skin component 12 in the plate thickness direction in the non-joined portion 32 is the same as the height of the surface of the patch member 21 in the plate thickness direction in the joined portion 31. Thus, smoothness on the surface of the sandwich panel structure 1 can be ensured.

Additionally, relatively high homogeneity can be achieved between the non-joined portion 32 and the joined portion 31 because the skin component 12 in the non-joined portion 32 and the combined structure of the skin components 12 and the patch members 21 in the joined portion 31 are similar to each other.

In summary, in this embodiment, the followings hold when each split member 11 of the plurality of split members 11 is denoted as a first split member and the first split member is joined to a second split member of the plurality of split members 11. The sandwich panel structure 1 is formed from the first split member, the second split member, the patch members 21, and the adhesive 22, as a specific example.

Each of the first split member and the second split member is formed from two skin components 12 and the core component 13 positioned between the two skin components 12. Here, one of the two skin components 12 of the first split member is denoted as a first target skin component.

The first target skin component has the groove portion 23 in the joined portion 31 of the first split member in which the first split member is joined to the second split member, the groove portion 23 being formed by reducing the thickness of the first target skin component in a range in which the outer surface of the core component 13 remains unexposed.

With the first split member and the second split member being in a joined state, the patch member 21 is positioned in the groove portion 23 via the adhesive 22. In this state, at the boundary between the joined portion 31 and the non-joined portion 32, the total thickness of the first target skin component, the adhesive 22, and the patch member 21 in the plate thickness direction in the joined portion 31 is continuous with the thickness of the first target skin component in the plate thickness direction in the non-joined portion 32. The non-joined portion 32 is a part of the first split member other than the joined portion 31.

As a specific example, the depth of the groove portion 23 in the plate thickness direction is equal to the sum of the thickness of the patch member 21 in the plate thickness direction and the thickness of the adhesive 22 in the plate thickness direction. The adhesive 22 is positioned between the first split member and the patch member 21.

The material of the first target skin component may be the same as the material of the patch member 21.

While the sandwich panel structure 1 was described as having a uniform thickness and being plate-shaped, the thickness of the sandwich panel structure 1 need not be uniform and the shape need not be plate-shaped. As a specific example, the sandwich panel structure 1 may be curved or cylindrical in shape and vary in thickness from position to position.

While the sandwich panel structure 1 was described as being formed from two split members 11, the sandwich panel structure 1 may be formed from three or more split members 11.

While the plane of splitting of the split member 11 was described as a plane with the normal being in the longitudinal direction, the plane of splitting may also be a plane with the normal being in a different direction arbitrarily established. The plane of splitting may be a plane with the normal in the direction into and out of the page or a certain direction in a plane defined by the longitudinal direction and the direction into and out of the page, as specific examples.

While the materials used for the skin component 12 and the patch member 21 were described as aluminum alloys, the materials need not be aluminum alloys. The material of at least one of the skin component 12 and the patch member 21 can be metal such as stainless alloy or magnesium alloy, Fiber Reinforced Plastic (FRP) such as Carbon Fiber Reinforced Plastic (CFRP) or Glass Fiber Reinforced Plastic (GFRP), ceramics such as C/C (Carbon Fiber Reinforced Carbon) or SiC, wood, or plastic, as specific examples.

While the materials of the skin component 12 and the patch member 21 were described as both being an aluminum alloy, that is, being the same, the materials of the skin component 12 and the patch member 21 may be different from each other.

While the patch member 21 was described as being provided on both of the skin components 12, the patch member 21 may also be provided only on one skin component 12.

While the material of the core component 13 was described as being honeycomb core, the material need not be honeycomb core. The material can also be foam core, flexible core, paper core, or the like.

While the shape of a skin portion was described as being constant in thickness between the joined portion 31 and the non-joined portion 32, the thickness of the skin portion may vary continuously across the joined portion 31 and the non-joined portion 32. That is, with the first split member and the second split member being in a joined state, the thickness of the skin portion in the plate thickness direction may vary continuously across the joined portion 31 and the non-joined portion 32 along the longitudinal direction of the sandwich panel structure 1. The skin portion is the entire of the first target skin component, the adhesive 22 positioned between the first target skin component and the patch member 21, and the patch member 21.

While the thickness of the skin component 12 was described as non-continuously changing between the joined portion 31 and the non-joined portion 32, the thickness of the skin component 12 may also continuously change between the joined portion 31 and the non-joined portion 32. In a case where the thickness of the skin component 12 continuously changes between the joined portion 31 and the non-joined portion 32, an inclination can be formed on the first target skin component near the boundary between the joined portion 31 and the non-joined portion 32, such that the thickness of the first target skin component in the plate thickness direction changes around the boundary along the longitudinal direction in a tapered form, as a specific example.

While use of film adhesive as the adhesive 22 was described, the adhesive 22 need not be film adhesive. The adhesive 22 may also be one-part liquid adhesive, two-part liquid adhesive, foam adhesive, or the like.

While the adhesive 22 was described as being composed of a single kind of adhesive, different kinds of adhesive 22 may be used depending on where the adhesive 22 is used or the like. As a specific example, it is preferable to use foam adhesive in joining of core components 13 with pores, such as honeycomb core, to each other.

While the cross section of the patch member 21 was described as being rectangular, the cross section of the patch member 21 need not be rectangular. The patch member 21 may have a taper in the whole or part thereof. The cross section of the patch member 21 may be any shape that is consistent with the shape of groove portion 23, such as a triangle or a trapezoid as specific examples.

While the ratio of the thickness of the adhesive 22 to the thickness of the patch member 21 was described as being 1/10, the ratio need not to be 1/10. The ratio may also be 10, 52, 1, 1/2, 1/5, 1/20, 1/50, or 1/100 as specific examples. The ratio is preferably small, more preferably smaller than 1.

### Description of effects of Embodiment 1

According to this embodiment, the sandwich panel structure 1 includes the groove portions 23 formed in the split member 11 and the patch members 21 positioned in the groove portions 23. The patch members 21 and the groove portions 23 are joined together via the adhesive 22. The groove portion 23 is formed by decreasing the thickness of the skin component 12 of the split member 11. Accordingly, at the boundary between the joined portion 31 and the non-joined portion 32, the total thicknesses of the patch member 21, the skin component 12, and the adhesive 22 in the joined portion 31 can be the same as the thickness of the skin component 12 in the non-joined portion 32. This embodiment thus can achieve a component with the joined portion 31 and the non-joined portions 32 being homogenous.

According to this embodiment, a structure that is uniform in the joined portion 31 of the sandwich panel structure 1 can also be created. This embodiment therefore can decrease stress concentration, thermal deformation, and the like.

### Embodiment 2.

Differences from the above-described embodiment are primarily described below with reference to drawings.

### Description of construction

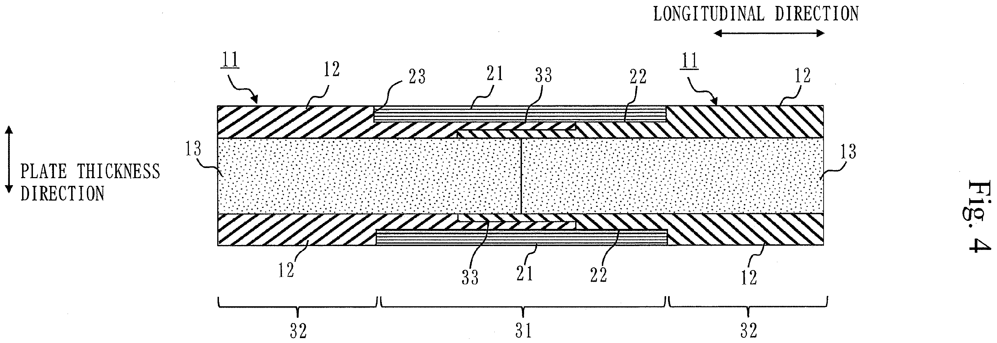

FIG. 4 is a side view showing an exemplary configuration of the sandwich panel structure 1 according to Embodiment 2. The sandwich panel structure 1 has a skin-skin fitting portion 33.

The skin-skin fitting portion 33 is a portion in the shape of a protrusion and a depression formed in the two opposing skin components 12 such that the two skin components 12 fit into each other in the joined portion 31. The two opposing skin components 12 are two skin components 12 to be joined to each other.

The construction of the joined portion 31 is described below in greater detail with specific examples.

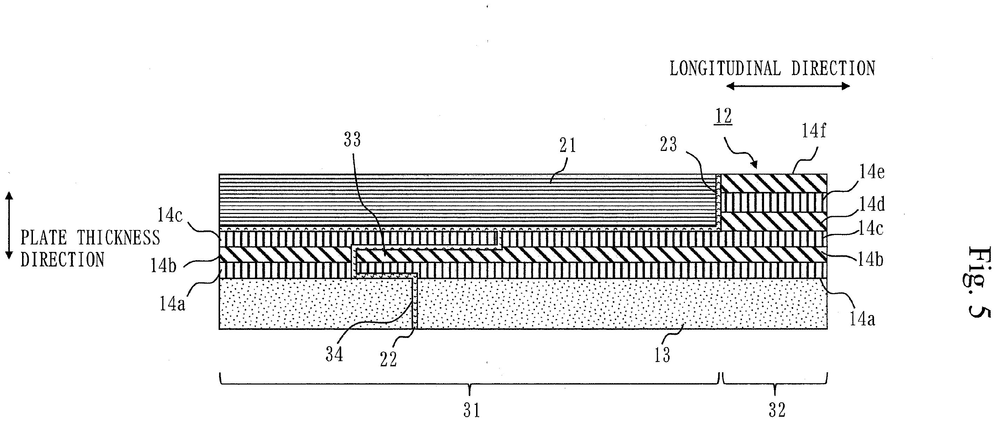

FIG. 5 is a cross-sectional enlarged view of one side of the sandwich panel structure 1 according to Embodiment 2, showing an exemplary configuration of the sandwich panel structure 1. FIG. 5 is described for a case of using fiber reinforced plastic (FRP) as the skin component 12.

Each skin component 12 consists of six layers, FRP layers 14a to 14f. Each FRP layer 14 is made of carbon fiber T800S (manufactured by Toray Industries, Inc.) and epoxy resin.

In FIG. 5, for the left split member, only the FRP layers 14a to 14c are shown as FRP layers 14 among the FRP layers 14a to 14f. The left split member is the split member 11 that is positioned on the left side in the drawing.

The FRP layer 14a and the FRP layer 14b of the left split member each do not reach a plane of splitting 34 of the core in the longitudinal direction, that is, they do not reach the end of the core component 13 of the left split member. Thus, in the left split member, a depression of the skin-skin fitting portion 33 is formed by the FRP layer 14a and the FRP layer 14b.

Meanwhile, in FIG. 5, the FRP layer 14a and the FRP layer 14b of the right split member each reach beyond the plane of splitting 34 of the core in the longitudinal direction; they extend beyond the end of the core component 13 of the right split member in the longitudinal direction up to a position where they face the FRP layer 14a and the FRP layer 14b, respectively, of the left split member. Thus, in the right split member, a protrusion of the skin-skin fitting portion 33 is formed by the FRP layer 14a and the FRP layer 14b. The right split member is the split member 11 that is positioned on the right side in the drawing.

The FRP layer 14c is relatively longer in the left split member and relatively shorter in the right split member. As a result, a protrusion is formed by the FRP layer 14c in the left split member, while a depression is formed by the FRP layer 14c in the right split member. The FRP layer 14c of the left split member and the FRP layer 14c of the right split member are opposite one another. The right split member may be regarded as the first split member and the left split member may be regarded as the second split member.

The length of the protrusion of the left split member and the length of the protrusion of the right split member in the skin-skin fitting portion 33 in the longitudinal direction are each 20 mm.

The FRP layer 14c defines the lower surface of the groove portion 23, into which the patch member 21 is fit.

The FRP layers 14d to 14f define a side surface of the groove portion 23.

In this example, the sandwich panel structure 1 can join the two split members 11 relatively firmly due to the presence of the skin-skin fitting portion 33, in which the FRP layers 14a to 14c fit to each other.

In summary, the followings hold in this embodiment.

In the joined portion 31, a depression is formed in the first target skin component. In a part of the second split member that is to be joined to the first split member (the joined portion 31), a protrusion is formed in the second target skin component. The second target skin component is the skin component 12 that is included in the second split member and that is positioned opposite the first target skin component when the first split member and the second split member are in a joined state. With the first split member and the second split member being in a joined state, the depression and the protrusion fit to each other.

The depression is formed in a plane of joining, which is a plane in which the first split member and the second split member are joined to each other. A depth direction of the depression is the longitudinal direction of the sandwich panel structure. The protrusion is formed in the plane of joining. A height direction of the protrusion is the longitudinal direction.

Each of the first target skin component and the second target skin component is made of fiber reinforced plastic. Each of the depression and the protrusion is formed from layers of fiber reinforced plastic.

While this embodiment was described for the case of using carbon fiber as reinforcement fiber for fiber reinforced plastic and epoxy resin as base resin, other kinds of reinforcement fiber and base resin may be used so that desired characteristics are attained.

The reinforcement fiber can be glass fiber, aluminum oxide fiber, boron fiber, silicon carbide fiber, aramid fiber, Kevlar (registered trademark) fiber, Dyneema (registered trademark) fiber, Zylon (registered trademark) fiber, or hemp fiber, as specific examples. The fiber may be in any form, such as short or long fiber, or fabric or braid made using it.

The base resin can be unsaturated polyester resin, vinyl ester resin, phenolic resin, cyanate ester resin, polyvinyl acetate, polycarbonate, polyacetal, polyphenylene oxide, polyphenylene sulfide, polyarylate, polyester, polyamide-imide, polyimide, or polyether imide, as specific examples.

While the lengths of the right and left protrusions in the longitudinal direction were described as being 20 mm each, the lengths need not be 20 mm. The lengths may also be 10 mm, 50 mm, 100 mm, or 200 mm, as specific examples.

While the lengths of the protrusion of the left split member and the protrusion of the right split member were described as being the same, the lengths may be different from each other for the left split member and the right split member.

While the left split member and the right split member were described as each having one protrusion, they may each have two or more protrusions.

### Description of effects of Embodiment 2

According to this embodiment, the skin components 12 are joined to each other in a fitting manner in the joined portion 31 of the sandwich panel structure 1. This embodiment can thus join the split members 11 to each other more firmly.

### Embodiment 3.

Differences from the above-described embodiments are primarily described below with reference to drawings.

### Description of construction

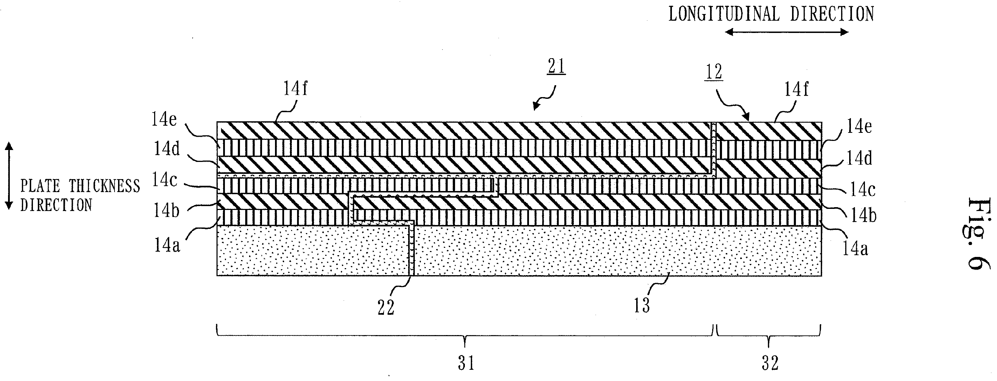

FIG. 6 is a cross-sectional enlarged view of one side of the sandwich panel structure 1 according to Embodiment 3, showing an exemplary configuration of the sandwich panel structure 1.

The skin component 12 and the patch member 21 are each made of FRP and consist of multiple layers. Between the left split member and the right split member, opposing layers have the same fiber orientation. A fiber content rate (Vf) of the skin component 12 is lower than a fiber content rate of the patch member 21. That is, the fiber content rate of the patch member 21 is higher than the fiber content rate of the first target skin component.

The construction of the joined portion 31 is described below in greater detail with specific examples.

In FIG. 6, the patch member 21 has three layers, the FRP layers 14d to 14f, and each skin component 12 has six layers, the FRP layers 14a to 14f.

The thickness of the skin component 12 in the non-joined portions 32 is 600 µm. The thickness of the patch member 21 is 270 µm and the thickness of the adhesive 22 is 30 µm. The FRP layers 14d to 14f of the patch member 21 are opposite the FRP layers 14d to 14f of the skin component 12, respectively. Each pair of opposing layers have the same fiber, resin, and fiber orientation.

Meanwhile, the fiber content rate of each of the FRP layers 14d to 14f of the patch member 21 is 56 %. Vf of each of the FRP layers 14a to 14f of the skin component 12 is 50 %. Thus, Vf is 50 % when the FRP layers 14a to 14c of the skin component 12, the adhesive 22, and the FRP layers 14d to 14f of the patch member 21 are viewed as one piece in the joined portion 31. Therefore, Vf of the joined portion 31 agrees with Vf of the skin component 12 in the non-joined portion 32. Thus, homogeneity between the joined portion 31 and the non-joined portion 32 is high.

That is, in this embodiment, with the first split member and the second split member being in a joined state, the material forming the skin portion is continuous along the longitudinal direction at the boundary between the joined portion 31 and the non-joined portion 32.

### Description of effects of Embodiment 3

According to this embodiment, each pair of opposing layers have the same fiber orientation, and also the fiber content rates agree between the joined portion 31 and the non-joined portion 32. According to this embodiment, therefore, relatively high homogeneity can be achieved between the joined portion 31 and the non-joined portion 32 of the sandwich panel structure 1.

### Embodiment 4.

Differences from the above-described embodiments are primarily described below with reference to drawings.

### Description of construction

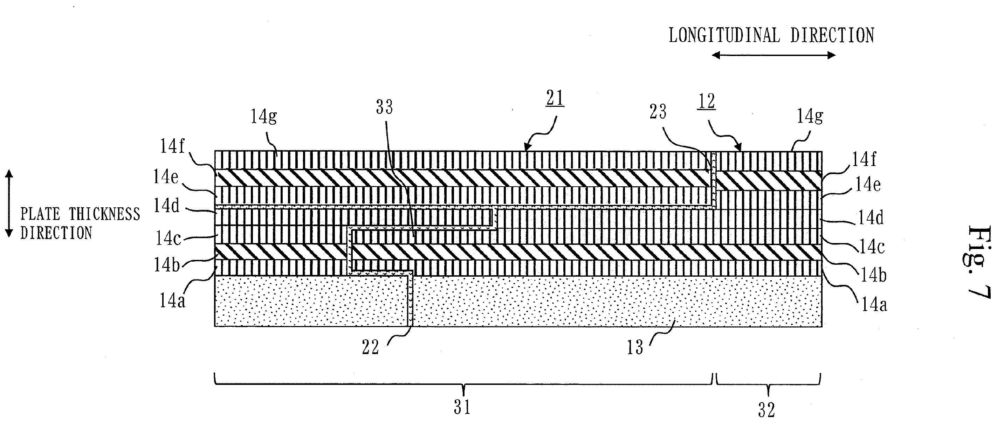

FIG. 7 is a cross-sectional enlarged view of one side of the sandwich panel structure 1 according to Embodiment 4, showing an exemplary configuration of the sandwich panel structure 1. In Embodiment 4, a projecting protrusion of the skin-skin fitting portion 33 of the skin component 12 is configured not to become warped due to thermal deformation. The protrusion according to this embodiment does not warp in the plate thickness direction more than a warp reference value upon normal thermal deformation.

The construction of the joined portion 31 is described below in greater detail with specific examples.

In FIG. 7, each skin component 12 consists of seven layers, FRP layers 14a to 14g, made of the same material, where the FRP layers 14a to 14d of the skin component 12 of the left split member and the FRP layers 14a to 14d of the skin component 12 of the right split member are opposite each other, respectively.

The FRP layers 14e to 14g of the skin component 12 form a side surface of the groove portion 23.

The FRP layers 14a to 14c are longer in the right split member than in the left split member. As a result, a protrusion of the skin-skin fitting portion 33 is formed in the right split member. The FRP layers 14a to 14c are a symmetric laminate. More specifically, when the longitudinal direction is assumed to be 0° direction, the FRP layers 14a to 14c are in [0/90/0] orientation.

By contrast, the FRP layer 14d is longer in the left split member than in the right split member. As a result, a protrusion of the skin-skin fitting portion 33 is formed in the left split member. The FRP layer 14d is a [0] single layer. Here, the single layer can be considered as a symmetric laminate. That is, the layers of the protrusion are a symmetric laminate.

In a symmetric laminate of the same material, no deformation (warp) in the plate thickness direction occurs. Thus, when the split member 11 is in a split state, no warp occurs in each of the right FRP layers 14a to 14c and the left FRP layer 14d representing the protrusion of the skin-skin fitting portion 33. This makes assembly of the split member 11 relatively easy. The phrase "no warp occurs" may indicate that an amount of warp is equal to or less than a certain value.

The patch member 21 is a [0/90/0] symmetric laminate in conformity to the orientations of the FRP layers 14e to 14g. Accordingly, no warp occurs in the patch member 21.

The construction of the FRP layers 14 representing the protrusion of the skin-skin fitting portion 33 and the construction of the patch member 21 were each described for the case of using the same material for the respective layers and implementing symmetric lamination. However, not all of the materials of the layers need to be the same and implementing symmetric lamination is not essential, that is, the layers of the protrusion may also be an asymmetric laminate. When non-identical materials are used for the respective layers, warp is prevented by creating a symmetric laminate in terms both of material and orientation.

It is also possible to make a construction that does not cause warp by using non-identical materials for the respective layers, laminating them such that their orientations are asymmetric, and designing the coefficients of thermal expansion to have small bending components. As a specific example, such a construction is possible that warp of the protrusion in the plate thickness direction caused by thermal change during molding is equal to or less than 1/1, 1/2, 1/5, 1/10, or 1/20 of the thickness of a single layer of FRP. The numerical values represent warp reference values. When the protrusion is a single layer, it can be considered to be a symmetric laminate with the neutral axis being the center of the layer.

While it was described that no warp occurs in either of the FRP layers 14 representing the protrusion of the skin-skin fitting portion 33 and the patch member 21, there may be only one portion where no warp occurs. A construction where no warp occurs in a thick plate portion of high rigidity is preferred.

### Description of effects of Embodiment 4

According to this embodiment, designing of the fiber orientations prevents warp from occurring in the skin component 12 or the patch member 21 or in both of them in the joined portion 31 of the sandwich panel structure 1 when the split member 11 is in a split state. Accordingly, this embodiment can make assembly of the sandwich panel structure 1 relatively easy.

### Embodiment 5.

Differences from the above-described embodiments are primarily described below with reference to drawings.

### Description of construction

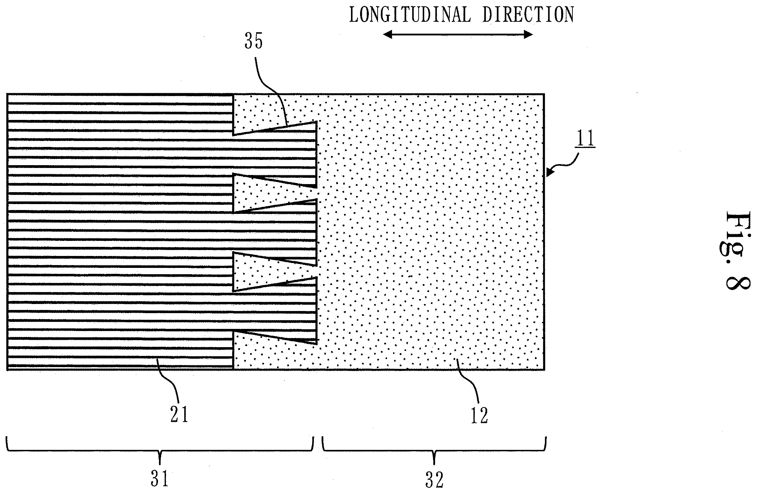

FIG. 8 is an upper view showing an exemplary configuration of the sandwich panel structure 1 according to Embodiment 5. As shown in FIG. 8, in Embodiment 5, the skin component 12 and the patch member 21 have forms of protrusions and depressions to fit into each other. More specifically, in FIG. 8, the skin component 12 and the patch member 21 each have a skin-patch fitting portion 35, in which the skin component 12 and the patch member 21 fit to one another in a dovetail manner.

The patch member 21 has the same shape in the plate thickness direction. In this example, the skin component 12 and the patch member 21 can be joined together more firmly by providing the skin component 12 and the patch member 21 with the skin-patch fitting portions 35 that fit into each other.

In summary, the followings hold in this embodiment.

A first protrusion-depression portion is formed in the first target skin component. A second protrusion-depression portion is formed in the patch member 21. In a plane of interest, which is a plane with the normal in the plate thickness direction, the first protrusion-depression portion is in the form of protrusions and depressions and the second protrusion-depression portion is in the form of protrusions and depressions. With the first split member and the second split member being in a joined state, the first protrusion-depression portion and the second protrusion-depression portion fit to each other.

In the plane of interest, at least some of sides of the first protrusion-depression portion are not along the longitudinal direction, and at least some of sides of the second protrusion-depression portion are not along the longitudinal direction. Accordingly, with the first protrusion-depression portion and the second protrusion-depression portion being fit to each other, the first target skin component and the patch member 21 do not separate from each other when the first target skin component and the patch member 21 are pulled in opposite directions to each other along the longitudinal direction.

While the shape of the skin-patch fitting portion 35 was described as being a dovetail shape, the shape need not be a dovetail. The shape may also be a hammer-headed tenon or a dovetail hook, as specific examples.

While the patch member 21 was described as having the same shape in the plate thickness direction, the patch member 21 may have a varying shape in the plate thickness direction.

### Description of effects of Embodiment 5

According to this embodiment, the skin component 12 and the patch member 21 are joined in a fitting manner at the joined portion 31. This embodiment can thus make the joining between the skin component 12 and the patch member 21 more firm.

### Embodiment 6.

Differences from the above-described embodiments are primarily described below with reference to drawings.

### Description of a method of manufacture

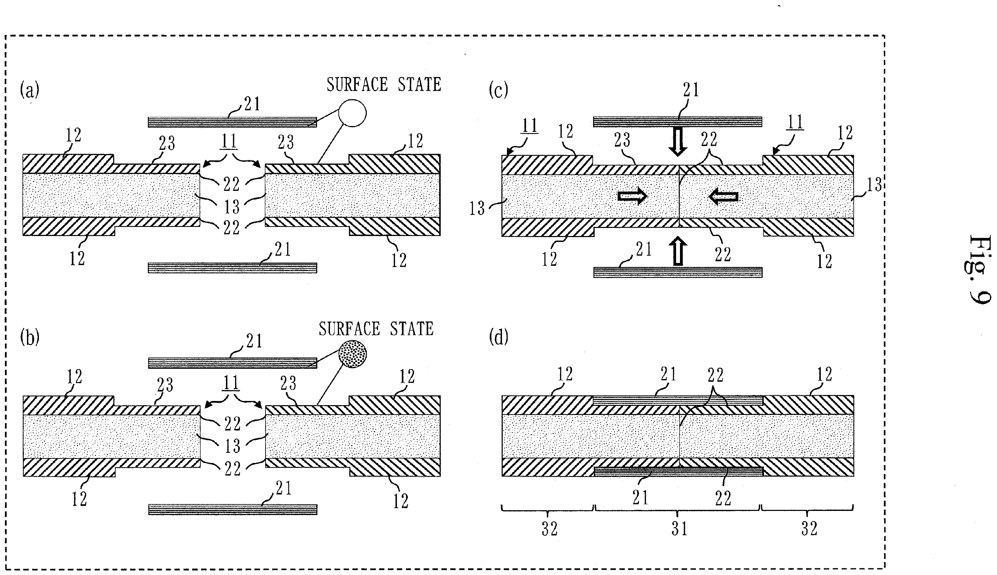

A specific example of the method of manufacturing the sandwich panel structure 1 according to the present invention will be described with reference to FIG. 9. This method of manufacture represents a method of manufacturing a sandwich panel structure. FIG. 9 illustrates the specific example of the method of manufacturing the sandwich panel structure 1 according to Embodiment 6.

Through Steps 1 to 4, the sandwich panel structure 1 formed from the split member 11, the patch member 21, and the adhesive 22 positioned between the members is made. The method is described here for a case where there are two split members 11 in total and the skin component 12 and the patch member 21 are each made of FRP.

### (Step 1: member molding step)

In this step, the split member 11 and the patch member 21 are made separately. (a) of FIG. 9 shows a cross-sectional view after the members were made separately.

The split member 11 is made by making the skin component 12 and then joining and integrating the skin component 12 and the core component 13 with the adhesive 22.

When making the skin component 12, approximate geometries of the groove portion 23 are formed by providing a smaller number of FRP laminations in the joined portion 31 than the number of FRP laminations in the non-joined portion 32.

The surfaces of the skin component 12 and the patch member 21 after this step are in a state where the surface states of a mold have been transferred and are relatively smooth.

The member molding step is also a step of molding each of the first split member, the second split member, and the patch member 21.

### (Step 2: groove and patch member processing step)

In this step, processing related to the groove portion 23 and the patch member 21 is performed. (b) of FIG. 9 shows a cross-sectional view after groove processing.

In the groove and patch member processing step, two kinds of processing, shape processing and surface state processing, are performed.

In the shape processing, the portion to be the groove portion 23 with the approximate geometries made in Step 1 is machine-processed into desired geometries in order to address resin leak, shape discrepancy arising from hardening and shrinkage deformation or the like.

In the surface state processing, griding with abrasive paper is performed on the surfaces of the groove portion 23 and the patch member 21 to increase the adhesiveness of the groove portion 23 and the patch member 21.

The step of forming the approximate geometries of the groove portion 23 and the step of processing the groove portion 23 in Step 2 are collectively called a groove processing step. The groove processing step is also a step of processing a first groove portion by reducing the thickness of the first target skin component in the plate thickness direction within a range in which the outer surface of the core component 13 of the first split member remains unexposed, and processing a second groove portion by reducing the thickness of the second target skin component in the plate thickness direction within a range in which the outer surface of the core component 13 of the second split member remains unexposed.

The depth of the first groove portion is a depth defined in accordance with the sum of the thickness of the patch member 21 in the plate thickness direction and the thickness of the adhesive 22 positioned between the first groove portion and the patch member 21 in the plate thickness direction. The depth of the second groove portion is a depth defined in accordance with the sum of the thickness of the patch member 21 in the plate thickness direction and the thickness of the adhesive 22 positioned between the second groove portion and the patch member 21 in the plate thickness direction.

### (Step 3: positioning step)

In this step, the members forming the sandwich panel structure 1 are positioned at desired locations. (c) of FIG. 9 shows a cross-sectional view in the positioning step. The arrows in (c) of FIG. 9 indicate the directions of movement of the members. The positioning step is sequentially described below.

First, the adhesive 22 is placed on faces on which the split members 11 will come into contact with each other.

Next, the split members 11 are slid in the longitudinal direction and butted to each other. In doing so, if the skin-skin fitting portions 33 are present, they are positioned such that the right and left protrusions and depressions fit into each other. Here, it is not necessary to raise the split members 11 since the split members 11 are slid in the longitudinal direction.

Next, the adhesive 22 is placed in the groove portion 23 formed by the two split members 11.

Next, each patch member 21 is positioned from the plate thickness direction of the sandwich panel structure 1. In doing so, if the skin-patch fitting portions 35 are present, they are positioned such that the protrusions and depressions of the skin component 12 and the patch member 21 fit into each other.

The positioning step is also a step of positioning the first split member, the second split member, the patch member 21, and the adhesive 22 in accordance with the shape of the sandwich panel structure 1. In the positioning step, the first split member and the second split member may be joined together by moving each of the first split member and the second split member in a normal direction of the plane of joining of the first split member and the second split member with the first split member and the second split member being joined together.

### (Step 4: integration step)

In this step, the members forming the sandwich panel structure 1 that were positioned at desired locations in the positioning step are integrated. (d) of FIG. 9 shows a cross-sectional view after integration.

In the integration step, the members forming the sandwich panel structure 1 are integrated by curing the adhesive 22 in the joined portion 31. As an example of a way of curing, the surface of the joined portion 31 can be covered with a rubber heater (not illustrated) and the rubber heater can be powered to heat the rubber heater, thus heating and curing the adhesive 22. When heating with a rubber heater, by placing a weight (not illustrated) on a surface of the rubber heater that is different from the surface in contact with the sandwich panel structure 1, a gap that is created between the patch member 21 and the skin component 12 can be reduced to achieve a firmer join.

The integration step is also a step of integrating the first split member, the second split member, and the patch member 21 by curing the adhesive 22.

In the description above, the split member 11 is made by creating the skin component 12 and then integrating the skin component 12 and the core component 13 with the adhesive 22 in Step 1. However, the skin component 12 may be placed on the core component 13, and molding of the skin component 12 and integration of the skin component 12 and the core component 13 may be performed simultaneously. In this process, the adhesive 22 may be placed between the skin component 12 and the core component 13.

While the case of forming approximate geometries of the groove portion 23 in Step 1 was described, approximate geometries of the groove portion 23 need not be formed in Step 1. In a case where approximate geometries of the groove portion 23 are not formed in Step 1, the groove portion 23 would be formed in the shape processing in Step 2.

While the surface state processing was described as grinding with abrasive paper, the processing need not be griding with abrasive paper. The surface state processing can also be griding performed with abrasive cloth, a wire brush, or sand blasting, as specific examples. In the surface state processing, chemical treatment, primer treatment, ultraviolet irradiation treatment, plasma treatment, or the like may be performed instead of or in addition to griding.

While the case of heating with a rubber heater in Step 4 was described, heating may be performed without using a rubber heater. Means of heating can be use of an IR (infrared) heater, a heat gun, or an oven as specific examples.

While the case of use of a weight for reducing the gap that is created between the patch member 21 and the skin component 12 in Step 4 was described, the gap can also be reduced in a method that does not use a weight. Such a method can be clamping with a vise, or local bagging as specific examples.

### Description of effects of Embodiment 6

This embodiment allows for relatively easy assembly of the sandwich panel structure 1.

### Other embodiments

Any desired combination of the embodiments described above, modification to a certain component of an embodiment, or omission of a certain component in an embodiment are possible.

Embodiments are not limited to the ones shown in Embodiments 1 to 6 but different modifications are possible as desired.

### List of Reference Signs

- 1:: sandwich panel structure;
- 11:: split member;
- 12:: skin component;
- 13:: core component;
- 14, 14a, 14b, 14c, 14d, 14e, 14f, 14g:: FRP layer;
- 21:: patch member;
- 22:: adhesive;
- 23:: groove portion;
- 31:: joined portion;
- 32:: non-joined portion;
- 33:: skin-skin fitting portion;
- 34:: plane of splitting;
- 35:: skin-patch fitting portion.

## Claims

1. A sandwich panel structure comprising a plurality of split members, wherein
when each split member of the plurality of split members is denoted as a first split member and the first split member is joined to a second split member of the plurality of split members,
the first split member is formed from two skin components and a core component positioned between the two skin components, one of the two skin components being denoted as a first target skin component,
the first target skin component has a groove portion in a joined portion of the first split member in which the first split member is joined to the second split member, the groove portion being formed by reducing a thickness of the first target skin component in a range in which an outer surface of the core component remains unexposed, and
with the first split member and the second split member being in a joined state,
a patch member is positioned in the groove portion via adhesive, and
at a boundary between the joined portion and a non-joined portion, the non-joined portion being a portion of the first split member other than the joined portion, a total thickness of the first target skin component, the adhesive, and the patch member in a plate thickness direction in the joined portion is continuous with a thickness of the first target skin component in the plate thickness direction in the non-joined portion.

2. The sandwich panel structure according to claim 1, wherein
a depth of the groove portion in the plate thickness direction is equal to a sum of a thickness of the patch member in the plate thickness direction and a thickness of the adhesive in the plate thickness direction, and
the adhesive is positioned between the first split member and the patch member.

3. The sandwich panel structure according to claim 1 or 2, wherein
at least one of the first target skin component and the patch member is made of fiber reinforced plastic.

4. The sandwich panel structure according to any one of claims 1 to 3, wherein
each of the patch member and the first target skin component is made of fiber reinforced plastic, and
a fiber content rate of the patch member is higher than a fiber content rate of the first target skin component.

5. The sandwich panel structure according to any one of claims 1 to 4, wherein
in the joined portion, a depression is formed in the first target skin component,
in a part of the second split member that is to be joined to the first split member, a protrusion is formed in a second target skin component, the second target skin component being a skin component that is included in the second split member and that is positioned opposite the first target skin component when the first split member and the second split member are in a joined state, and
with the first split member and the second split member being in a joined state, the depression and the protrusion fit to each other.

6. The sandwich panel structure according to claim 5, wherein
the depression is formed in a plane of joining, the plane of joining being a plane in which the first split member and the second split member are joined to each other,
a depth direction of the depression is a longitudinal direction of the sandwich panel structure,
the protrusion is formed in the plane of joining, and
a height direction of the protrusion is the longitudinal direction.

7. The sandwich panel structure according to claim 5 or 6, wherein
each of the first target skin component and the second target skin component is made of fiber reinforced plastic, and
each of the depression and the protrusion is formed from layers of fiber reinforced plastic.

8. The sandwich panel structure according to any one of claims 5 to 7, wherein
each of the first target skin component and the second target skin component is made of fiber reinforced plastic, and
layers of the protrusion are a symmetric laminate.

9. The sandwich panel structure according to any one of claims 5 to 8, wherein
each of the first target skin component and the second target skin component is made of fiber reinforced plastic,
not all of materials of layers of the protrusion are the same,
the layers of the protrusion are an asymmetric laminate, and
the protrusion does not warp in the plate thickness direction more than a warp reference value upon thermal deformation.

10. The sandwich panel structure according to any one of claims 1 to 9, wherein
a first protrusion-depression portion is formed in the first target skin component,
a second protrusion-depression portion is formed in the patch member,
in a plane of interest, the first protrusion-depression portion is in the form of protrusions and depressions and the second protrusion-depression portion is in the form of protrusions and depressions, the plane of interest being a plane with the normal in the plate thickness direction, and
with the first split member and the second split member being in a joined state, the first protrusion-depression portion and the second protrusion-depression portion fit to each other.

11. The sandwich panel structure according to claim 10, wherein
in the plane of interest, at least some of sides of the first protrusion-depression portion are not along a longitudinal direction of the sandwich panel structure, and at least some of sides of the second protrusion-depression portion are not along the longitudinal direction, and
with the first protrusion-depression portion and the second protrusion-depression portion being fit to each other, the first target skin component and the patch member do not separate from each other when the first target skin component and the patch member are pulled in opposite directions to each other along the longitudinal direction.

12. The sandwich panel structure according to any one of claims 1 to 11, wherein
a material of the first target skin component is the same as a material of the patch member.

13. The sandwich panel structure according to any one of claims 1 to 12, wherein
a thickness of the first target skin component in the plate thickness direction varies continuously across the joined portion and the non-joined portion along a longitudinal direction of the sandwich panel structure.

14. The sandwich panel structure according to any one of claims 1 to 13, wherein
a material forming the first target skin component is continuous along a longitudinal direction of the sandwich panel structure at the boundary between the joined portion and the non-joined portion.

15. A method of manufacturing a sandwich panel structure that includes a first split member and a second split member, a patch member, and adhesive, each of the first split member and the second split member being formed from two skin components and a core component positioned between the two skin components,
when one of the two skin components of the first split member is denoted as a first target skin component, and one of the two skin components of the second split member that is positioned opposite the first target skin component when the first split member and the second split member are in a joined state is denoted as a second target skin component, the method comprising:
a member molding step of molding each of the first split member, the second split member, and the patch member;
a groove processing step of processing a first groove portion by reducing a thickness of the first target skin component in a plate thickness direction within a range in which an outer surface of the core component of the first split member remains unexposed, and processing a second groove portion by reducing a thickness of the second target skin component in the plate thickness direction within a range in which an outer surface of the core component of the second split member remains unexposed;
a positioning step of positioning the first split member, the second split member, the patch member, and the adhesive in accordance with a shape of the sandwich panel structure; and
an integration step of integrating the first split member, the second split member, and the patch member by curing the adhesive, wherein
a depth of the first groove portion is a depth defined in accordance with a sum of a thickness of the patch member in the plate thickness direction and a thickness of the adhesive positioned between the first groove portion and the patch member in the plate thickness direction, and
a depth of the second groove portion is a depth defined in accordance with a sum of the thickness of the patch member in the plate thickness direction and a thickness of the adhesive positioned between the second groove portion and the patch member in the plate thickness direction.

16. The method of manufacturing a sandwich panel structure according to claim 15, wherein
in the positioning step, the first split member and the second split member are joined together by moving each of the first split member and the second split member in a normal direction of a plane of joining of the first split member and the second split member with the first split member and the second split member being joined together.
